# EUROPÄISCHE PATENTSCHRIFT

(11) **EP 1 479 954 B1**
(45) Veröffentlichungstag und Bekanntmachung des Hinweises auf die Patenterteilung: **14.07.2010**
(21) Anmeldenummer: 04010652.8
(22) Anmeldetag: 05.05.2004
(51) Int. Cl.: F16K 15/18, B25B 27/14, H01R 43/042, B23D 29/00

(54) **Öldynamisches Druck- und Schneidwerkzeug**
Oil-hydraulic pressing and cutting tool
Outil poussant-coupant oléodynamique

(30) Priorität: 19.05.2003 IT BZ20030028
(43) Veröffentlichungstag der Anmeldung: 24.11.2004
(73) Patentinhaber: INTERCABLE SRL, 39031 Brunico (BZ) (IT)
(72) Erfinder: Mutschlechner, Klaus, 39031 Stegona/Brunico (Bolzano) (IT)
(74) Vertreter: Oberosler, Ludwig

(56) Entgegenhaltungen:
- EP-A- 0 391 317
- EP-A- 1 270 959
- WO-A-02/076681
- DE-U- 8 536 425
- FR-A- 2 585 893
- GB-A- 1 185 871
- GB-A- 2 351 254
- US-A- 2 821 877
- US-A- 2 968 202
- US-A- 3 822 966
- US-A- 4 136 549
- US-A- 4 151 720
- US-A- 4 893 530
- US-A- 5 934 136

## Beschreibung

Es sind öldynamische Handwerkzeuge bekannt welche in der Anlagentechnik für das Zusammendrücken von Kabelschuhen und Kabelverbindungen oder für das Durchtrennen von Kupfer- oder Aluminiumkabeln eingesetzt werden.

Die bekannten öldynamischen Werkzeuge bestehen wesentlich aus einem Pumpenkörper welcher fest mit einem Handgriff verbunden ist, aus einem zweiten Handgriff für die Betätigung der Pumpe welcher schwenkbar am selben Pumpenkörper gelagert ist und aus einem vorderen Ansatz am Pumpenkörper für den Einsatz von austauschbaren Druck- oder Schneidköpfen. Die Werkzeuge müssen mit einem Ablassventil versehen sein um, infolge der Ausführung eines Druck- oder Schneidvorganges, die Öffnung des Werkzeuges zu ermöglichen und weiters einen Sperrmechanismus aufweisen um das Spreizen des beweglichen Handgriffes durch Wirkung der auf den Pumpenkolben wirkenden Rückholfeder zu verhindern.

An den bekannten öldynamischen Werkzeugen erfolgt die Betätigung des Ablassventils über einen kleinen am schwenkbaren Handgriff oder am Pumpenkörper vorgesehenen Hebel, dieser wirkt auf ein Anschlagelement welches bei vollständigem Schließen des Hebels das Ablassventil betätigt. Dieses System birgt den Nachteil, dass um das Ablassventil zu betätigen eine weitere Betätigung des Handgriffes nötig ist, was eine weitere unerwünschte Kompression verursacht. Es ist auch eine Betätigung des Ablassventils durch Drehen des mit Öltank ausgestatteten und am Pumpkörper angelenkten Handgriffes bekannt. Diese Lösung bringt eine umständliche Handhabung mit sich weil über den betreffenden Handgriff das gesamte Gewicht des Werkzeuges getragen wird, weiters ist die Betätigung, im Falle eines hohen Arbeitsdruckes, nicht bequem weshalb dieses System nicht für Werkzeuge nutzbar ist welche z.B. einen Druck von ca. 550 bar überschreiten; dieser Betätigungsmechanismus ist weiters der Verschmutzung und erheblicher Abnützung ausgesetzt.

Aus der EP 1270959 A2 ist ein öldynamisches Werkzeug der eingangs beschriebenen Art bekannt an dessen schwenkbarem Handgriff ein schwenkbar gelagerter innerer Griff vorgesehen ist mittels welchem, zwecks Steuerung eines Ablassventiles, ein bewegliches Auslöseelement verstellt wird. Dieser besagte bewegliche Griff ist nicht für die Betätigung des Handgriffes mittels einer einzigen Hand geeignet.

Das Blockieren des schwenkbaren Handgriffes in geschlossener Stellung erfolgt an den bekannten Werkzeugen mittels eines kleinen Riemens welcher am Ende eines der Handgriffe befestigt ist und bei geschlossenen Handgriffen am Ende des anderen Handgriffes befestigt werden kann, wodurch das Spreizen der Handgriffe verhindert wird; auch ein durch Hebel oder Griff betätigtes Einhängelement welches am Handgriff vorgesehen ist kann das Spreizen verhindern.

Es ist weiters bekannt den schwenkbaren Handgriff im Bereich nahe der Schwenklagerung gekröpft auszuführen so dass sich dieser erste Abschnitt, in Bezug auf den entsprechenden zweiten Handgriff, näher an diesem erstreckt so dass in diesem Bereich beide Handgriffe mit einer einzigen Hand gehalten und betätigt werden können. Diese Lösung welche es der Bedienungsperson ermöglicht die Pumpe mit einer Hand durch kleine schnelle Hubbewegungen zu betätigen solange, bis zum Anstehen des Werkzeuges an die zu bearbeitenden Teilen, der Druck gering ist, um so die zweite Hand für das Positionieren frei zu halten, hat sich nicht als sehr praktisch erwiesen weil sie der Hand nicht genügend Bewegungsfreiheit gewährt da die Durchmesser der beiden Handgriffe nicht genügend Freiraum lassen um einen brauchbaren Hub durch die selbe Hand welche beide Griffe umschließt auszuführen. Weiters bieten die öldynamischen Werkzeuge, in der gegen ungewollte elektrische Kontakte isolierten Ausführung, nicht einen einfachen Austausch der nicht leitenden Elemente und machen somit die Wartung und die eventuellen Reparaturarbeiten zeitaufwändig und umständlich.

Die Erfindung stellt sich die Aufgabe ein öldynamisches Werkzeug der oben erwähnten Art zu schaffen welches eine bequeme Betätigung des Ablassventils in jeglicher Stellung des schwenkbaren Handgriffes und das Sperren der geschlossenen Stellung des schwenkbaren Handgriffes, ohne die Betätigung spezifischer Sperrmechanismen ermöglicht, welches weiters mit nur einer Hand betätigbar ist um die schnelle Anstellbewegung der Werkzeuge an das Werkstück zu erreichen wobei Wartungs- und Reparaturfreundlichkeit und ein optimaler Schutz gegen ungewollte elektrische Kontakte geboten wird.

Diese Aufgabe wird erfindungsgemäß dadurch gelöst, dass dem schwenkbaren Handgriff, sei es die Betätigung des Ablassventils, als auch die Sperrung der Schließstellung des Handgriffes zugeteilt wird; was hingegen den Schutz gegen ungewollte elektrische Kontakte betrifft, schlägt die Erfindung die Anbringung von Schalen aus nicht leitendem Werkstoff vor welche im Falle der Wartung und/oder Reparatur leicht abnehmbar und, im Falle von Beschädigung, austauschbar sind wobei die strengsten Sicherheitsnormen eingehalten werden.

Erfindungsgemäß ist der schwenkbare Handgriff am Körper der Ölpumpe gemäß seiner Längsachse drehbar gelagert wobei durch die Drehung eine axiale Verschiebung erzeugt wird, wobei eine Drehrichtung genutzt wird um auf das Ablassventil zu wirken und die andere entgegengesetzte Drehrichtung genutzt wird um auf ein Einhängorgan zu wirken. Auf diese Art ist es möglich, mit dem Handgriff in jeglicher Pumpstellung, auf das Ablassventil zu wirken ohne dabei das aufgesetzte Druck- oder Schneidwerkzeug weiter zu betätigen.

Das Sperren des Handgriffes in Schließstellung hingegen erfolgt durch Drehen des Handgriffes in die Gegenrichtung wodurch ein Einhängelement, nach Einnahme der Schließstellung des Handgriffes, in Einraststellung gebracht wird.

Um die obgenannten Steuerbewegungen (Drehen, Verschieben) zu erreichen wird erfindungsgemäß eine nach seiner Längsachse drehbare Lagerung des Handriffes am Aufnahmeelement vorgesehen, wobei am Ende des Handgriffes ein Dreh- und Verschiebungselement vorgesehen wird welches mit dem Aufnahmeelement in Schraubverbindung steht, durch Drehen des genannten Dreh- und Verschiebungselementes wird also eine axiale Verschiebung des Dreh- und Verschiebungselementes selbst erreicht welches koaxial am Ende des Handgriffes befestigt ist.

Das vordere Ende des genannten erfindungsgemäßen Dreh- und Verschiebungselementes ist geeignet um durch axialen Vorschub, infolge Drehung des Handgriffes z.B. nach rechts, auf mechanische Elemente zu wirken welche unter sich in Berührung sind oder unter sich verbunden sind und von mindestens einer Druckfeder belastet sind, wobei die genannte Feder mit Druck belastet wird und das Ablassventil geöffnet wird. Das am Ende des Handgriffes angebrachte Dreh- und Verschiebungselement welches einen Gewindebereich aufweist wirkt, mittels den beiden Enden des über den Durchmesser dieses Elementes vorstehenden Querstiftes und infolge Drehung in Gegenrichtung und somit infolge Verschiebung (Rückziehen), an einem Einhängelement dessen Ende, bei geschlossener Stellung des Handgriffes, in eine Ausnehmung am Pumpengehäuse eingreift um die Schließstellung des Handgriffes nahe am, mit dem Pumpgehäuse fest verbundenen Handgriff, zu sperren. Natürlich erfolgt die Freigabe dieser Schließposition durch Drehen des schwenkbaren Handgriffes in die Gegenrichtung. Um die Positionen der Betätigung des Ablassventiles, der Sperrung der Schließposition des schwenkbaren Handgriffes und der Pumpposition zu definieren, wirkt in einem Sitz der Drehlagerung des schwenkbaren Handgriffes ein Mechanismus welcher am Dreh- und Verschiebungselement vorgesehen ist mittels einer Kugel welche, unter Wirkung einer Feder, bei den einzelnen Drehpositionen des Handgriffes in kuppenförmige oder rillenförmige Sitze am Lagerelement schnappt welche der Position der einzelnen entsprechenden Betätigungsphasen (Öffnen des Ablassventils, Pumpen, Sperren des schwenkbaren Handgriffes) entsprechen.

Um eine hohe Sicherheit gegen ungewollte elektrische Kontakte zu erreichen sind die Handgriffe vorzugsweise aus nicht leitendem Werkstoff hergestellt, Der Bereich der Endabschnitte nahe dem Pumpenkörper ist jedenfalls erfindungsgemäß mit einer nicht leitenden Verbindungs- und Verstärkungshülse versehen, wobei die nicht leitende Hülse am schwenkbaren Handgriff für die Anbringung eines inneren Griffes genutzt wird welcher leicht mit einer Hand zusammen mit dem entsprechenden Bereich des unbeweglichen Handgriffes umgriffen werden kann um schnelle Pumpbewegungen zwecks einer schnellen Annäherung der Werkzeuge an die Verbindungsteile zu erreichen. Die Form dieses Griffes kann verschiedenartig sein, bügelförmig oder ringförmig und zwar geschlossen oder offen, einstückig mit der nicht leitenden Hülse sein oder an dieser, oder auch direkt am Handgriff, angebracht sein. Hat der Griff die Form eines offnen Bügels oder Ringes so besteht die Verbindung zum Handgriff oder zur Hülse aus nur einem Verbindungsschenkel. Die Erfindung schließt weiters nicht aus, dass sich der innere Griff über einen Teil oder über die gesamte Länge des Handgriffes erstreckt oder dass dieser Griff aus flexiblem Werkstoff ist oder ein Riemen oder eine Schnur ist.

Erfindungsgemäß kann der Pumpenkörper von zwei seitlichen Schalen, deren Ränder sich um eine von den Sicherheitsnormen festgelegte Breite übergreifen, abgedeckt sein und stirnseitig sowie rückseitig von einem Ring aus nicht leitendem Werkstoff in zusammengesteckter Position festgehalten werden. Der stirnseitige Ring bildet gleichzeitig auch einen Kragen welcher den Ansatzbereich der öl-dynamischen Druck- oder Schneidwerkzeugköpfe abdeckt während der hintere Ring die zusammengefügten, den vorderen Bereich der nicht leitenden Abdeckung des unbeweglichen Handgriffes, übergreifenden Schalen, festhält. Die beiden seitlich an den Pumpkörper angebrachten Schalen bilden erfindungsgemäß auch einen Teil der nicht leitenden Abdeckung des Lagerbereiches des schwenkbaren Handgriffes indem diese die Form einer Kugelkappe bilden welche von der Position des Lagerbolzens des schwenkbaren Handgriffes bestimmt wird. Dieser Bereich der isolierenden Abdeckung ist teilweise von einer Schale überdeckt welche am vorderen Ende der nicht leitenden Hülse des schwenkbaren Handgriffes angebracht ist. Diese Schale ist an seitlich, koaxial zur Drehachse des schwenkbaren Handgriffes, von den seitlich am Pumpkörper angebrachten nicht leitenden Schalen, vorstehenden Zapfen, aufgeschnappt und durch Zapfen gehalten welche von der nicht leitenden Hülse des schwenkbaren Handgriffes nahe dessen Lagerbereich abstehen, wodurch eine vollständige gelenkige Abdeckung des gesamten Lagerbereiches erreicht wird. Die Befestigung der nicht leitenden Schalen durch Aufschnappen und durch gegenseitiges Eingreifen ermöglichen erfindungsgemäß eine schnelle und leichte Montage und Demontage und somit einen leichten Austausch, bzw. erleichtern die Wartung und Reparatur am Werkzeug.

Die Erfindung wird anschließend anhand eines, in den Zeichnungen schematisch dargestellten, vorzuziehenden Ausführungsbeispieles eines erfindungsgemäßen öldynamischen Druck- und Schneidwerkzeuges näher erklärt, dabei erfüllen die Zeichnungen rein erklärenden, nicht begrenzenden, Zweck.

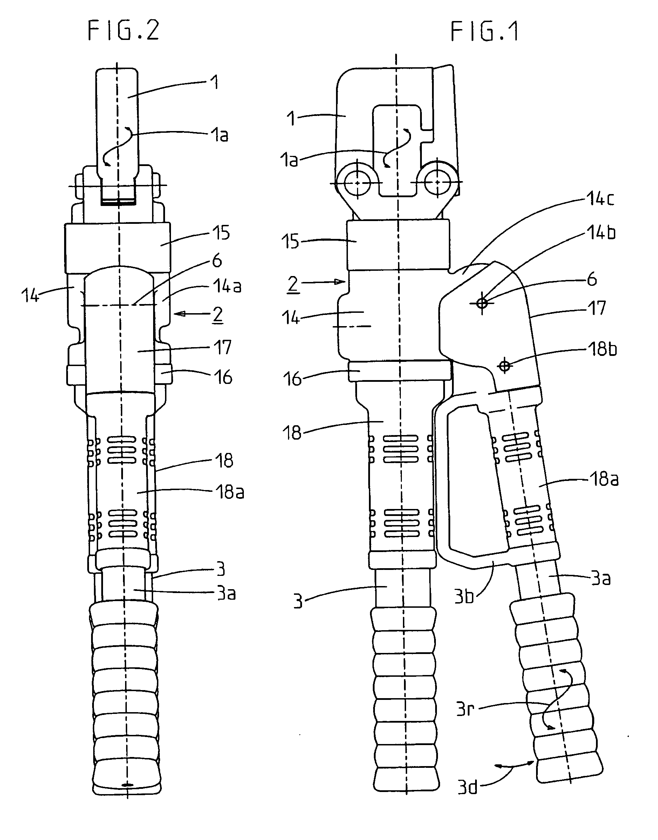

Die Fig. 1 zeigt eine Seitenansicht des erfindungsgemäßen öldynamischen Druck- und Schneidwerkzeuges mit geschlossenen Handgriffen.

Die Fig. 2 zeigt die Ansicht von links des in Fig. 1 dargestellten Werkzeuges.

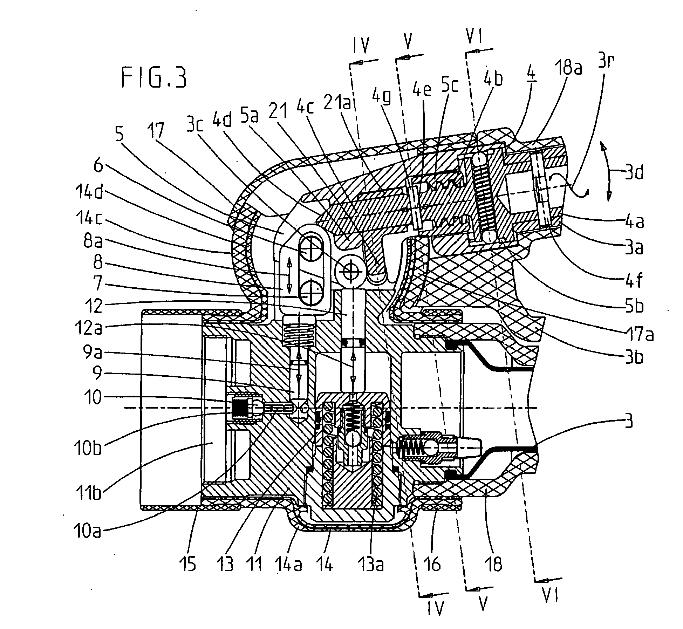

Die Fig. 3 zeigt den Querschnitt durch das Pumpgehäuse gemäß einer Schnittebene durch die Achsen der Handgriffe, durch die Lagerung des schwenkbaren Handgriffes, durch den Betätigungsmechanismus des Ablassventils und durch den Sperrmechanismus des schwenkbaren Handgriffes.

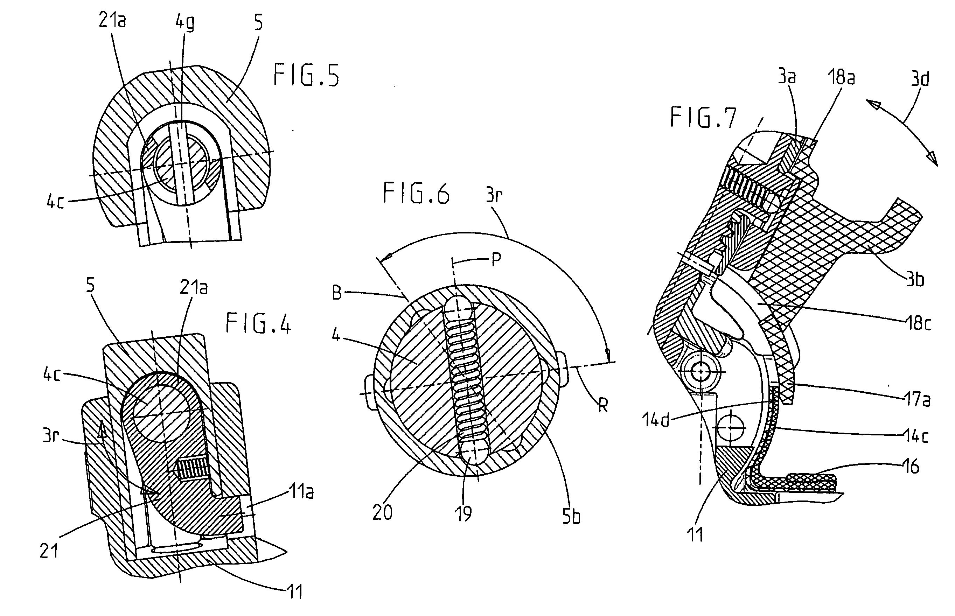

Die Fig. 4 ist eine Schnittdarstellung gemäß der in Fig. 3 gezeigten Schnittebene IV-IV welche durch das Einhängelement des schwenkbaren Handgriffes in geschlossener Stellung verläuft.

Die Fig. 5 ist eine Schnittdarstellung gemäß der in Fig. 3 gezeigten Schnittebene V-V welche durch den Betätigungsmechanismus des Einhängelementes des schwenkbaren Handgriffes in geschlossener Stellung verläuft.

Die Fig. 6 ist eine Schnittdarstellung gemäß der in Fig. 3 gezeigten Schnittebene VI-VI welche sich durch den Mechanismus für die Definierung der unterschiedlichen Betätigungspositionen des schwenkbaren Handgriffes erstreckt.

Die Fig. 7 zeigt in Schnittdarstellung das Detail des Gelenkes der nicht leitenden Abdeckung welche am Werkzeugkörper im Bereich zwischen den beiden Handgriffen in gespreizter Stellung angebracht ist.

Das öldynamische Druck- und Schneidwerkzeug besteht wesentlich aus einem Körper 2 welcher vom Gehäuse 11 für eine Hydraulikpumpe und die entsprechenden Ventile 10 gebildet ist; aus Leitungen für den Durchfluss des Öls, aus Betätigungsorganen, aus einem Handgriff 3 welcher fest mit dem Gehäuse 11 verbunden ist und aus einem Handgriff 3a welcher schwenkbar 3d am Gehäuse 11 gelagert 6 ist. Das Gehäuse 11 ist stirnseitig mit einem Ansatz für den Einsatz verschiedener drehbarer 1a öldynamischer Druck- oder Schneidköpfe 1 versehen.

Erfindungsgemäß ist der schwenkbare Handgriff 3a mittels Querstift 4f an einem rohrförmigen Ansatz 4a eines Dreh- und Verschiebungselementes 4 befestigt welches drehbar 3r an einem Lagerelement 5 gelagert ist das seinerseits schwenkbar 3d mittels Querbolzen 6 am Gehäuse 11 der Pumpe gelagert ist. Das selbe Element 4 ist mit einem Bolzen mit Rolle 3c versehen welche beim Schwenken 3d auf einen gleitenden 12a Stößel 12 wirkt welcher seinerseits auf den mit Rückholfeder 13a ausgestatteten Kolben 13 der Pumpe wirkt.

Das Dreh- und Verschiebungselement 4 weist stirnseitig einen bolzenförmigen Ansatz 4d mit konischem Ende 4d auf und ist drehbar 3r in einer Aufnahme 5a am Element 5 gelagert. Der bolzenförmige Ansatz 4c setzt sich in einem Gewindeteil 4b fort an welchen ein Teil mit größerem Durchmesser mit Querbohrung anschließt in welcher zwei Kugeln 19 aufgenommen sind welche durch eine zwischengelegte Feder 20 nach außen gedrückt werden, besagte Kugeln 19 rasten in entsprechende kugelkappenförmige Sitze oder Rillen welche im rohrförmigen Endbereich 5b für die Aufnahme des Lagerelementes 5 vorgesehen sind. Die kugelkappenförmige oder rillenförmigen Sitze definieren drei Positionen der Drehung 3r des schwenkbaren Handgriffes 3a gegenüber dem Lagerelement 5: eine mittlere Position P für das Pumpen, eine Position R für das Betätigen des Ablassventiles 10 und eine Position B für das Sperren des schwenkbaren Handgriffes 3a in geschlossener Stellung.

Nachdem der Gewindeabschnitt 4b mit einer entsprechenden Gewindebuchse 5c zusammenwirkt welche am Lagerelement 5 befestigt ist, wird erreicht, dass durch die Drehung 3r des schwenkbaren Handgriffes 3a, zusammen mit dem an diesem befestigten Dreh- / Verschiebungselement 4, dieses eine axiale Verschiebung 4e und zwar einen Vorschub infolge Drehung 3r nach rechts und einen Rückzug infolge Drehung 3r nach links, ausführt.

Durch die Drehung 3r von 90° des schwenkbaren Handgriffes 3a nach rechts, von der Position P in die Position R, welche durch die Kugeln 19 und den entsprechenden Sitzen definiert sind, wird das Vorschieben des konischen Endes 4d erreicht welches durch Druck auf das durch die Bolzen 6 und 7 geführte, abgerundete obere Ende des Gleitelementes 4d das progressive Verschieben 8a bewirkt wobei, unter Komprimieren der Feder, auf das obere Ende des Stößels 9 gedrückt wird und dieser nach unten verschoben 9a wird, wobei mit dessen unterem konischen Ende auf das konische Ende eines zweiten Stößels 10a, welcher zum ersten um ca. 90° versetzt ist, gedrückt wird und durch axiales Verschieben die Kugel 10 aus dem Sitz 10b hebt, wodurch der Durchfluss (Ablass) des unter Druck stehenden Öles frei wird.

Durch Verdrehen 3r des schwenkbaren Handgriffes 3a von der Position P nach links, oder von der Position R in Richtung Position B wird die Mitnahme des Einhängelementes 21 über die vorstehenden Enden eines Dornes 4g bewirkt welcher quer am bolzenförmigen Abschnitt 4c angebracht ist, wobei diese Enden an stirnseitige Vorsprünge der Lagerbuchse 21a des Einhängelementes 21 anschlagen welches drehbar am bolzenförmigen Abschnitt 4c aufgesteckt ist und mit der entgegengesetzten Stirnseite gegen die Lagerung 5a am Lagerelement 5 aufliegt. Das Einhängende des Einhängelementes 21 dringt also, bei geschlossener Stellung des schwenkbaren Handgriffes 3a, in die entsprechende Ausnehmung 11 a ein welche an einer vom Gehäuse 11 der Pumpe vorstehenden Wand vorgesehen ist, wodurch das Sperren des Handgriffes 3a in geschlossener Stellung erfolgt. Natürlich erfolgt die Entriegelung der genannten Position durch Drehen 3r des Handgriffes 3a nach rechts von der Position B in die Position P, wobei letzterer Position jene ist in welcher die Schwenkbewegung 3d für die Betätigung des Kolbens 13 der Pumpe durchführbar ist.

Um einen Schutz gegen ungewollte elektrische Kontakte zu erreichen schlägt die Erfindung die Verwendung von Handgriffen 3, 3a ausschließlich aus nicht leitendem Werkstoff und die vollständige Verkleidung des Gehäuses 11 der Pumpe, zusammen mit der Lagerung des schwenkbaren Handgriffes 3a und aller Mechanismen für die Betätigung des Ablassventiles und für die Sperre des Handgriffes 3a in geschlossener Stellung, mittels seitlicher leicht austauschbarer Abdeckschalen aus Kunststoff, unter reichlicher Einhaltung der geltenden Sicherheitsnormen, vor. Am Gehäuse 11 sind erfindungsgemäß, entsprechend der Richtung der Drehachse 6 des schwenkbaren Handgriffes 3a, zwei seitliche Schalen 14, 14a angebracht, diese überdecken sich entlang dem Verbindungsbereich und sind stirnseitig durch Aufsetzen eines Ringes 15 welcher auch den Ansatz der angebrachten austauschbaren Druck- oder Schneidwerkzeugköpfe 1 abdeckt und eines hinteren Ringes 16 aus nicht leitendem Werkstoff befestigt. Die Schalen 14, 14a bilden im Bereich der Schwenklagerung 6 des schwenkbaren Handgriffes 3a einen Kugelkuppenansatz 14c welcher teilweise von einer Schale 17 überdeckt wird welche am vorderen Ende der nicht leitenden Hülse 18a des Handgriffes 3a aufgeschnappt ist und von den aus dieser Hülse vorstehenden Zapfen 18b gehalten wird welche in entsprechende Bohrungen an der Schale 17 eingreifen. Die Schale 17 weist weiters im, der Achse der Lagerung 6 des Handgriffes 3a entsprechenden Bereich, seitliche Bohrungen auf in welche Zapfen 14b eingreifen welche, immer im der Achse der Lagerung 6 entsprechenden Bereich, seitlich aus den seitlichen Schalen 14 und 14a abstehen. Dadurch dass die Schale 17 im Bereich des Ansatzes 14c der seitlichen Schalen 14, 14a einen Bereich aufweist welcher den Ansatz 14c abdeckt und dass der Ansatz 14c und auch der Abdeckbereich der Schale 17 eine Wölbung mit Zentrum auf der Drehachse der Lagerung 6 aufweisen, wird eine gelenkige Verbindung zwischen den, am Gehäuse 11 befestigten, Schalen 14, 14a welche den Ansatz 14c bilden und der, am schwenkbaren Handgriff 3a befestigten, Schale 17 gebildet. Die Erfindung schließt nicht aus, dass die gelenkige Führung der nicht leitenden Schale 17 am kugelkuppenförmigen Ansatz 14c, 14d mittels kreisbogenförmiger Rillen deren Zentrum auf der Drehachse der Lagerung 6 liegt und in welchen entsprechende Stege oder Vorsprünge eingreifen, erfolgt. Um bei jeglichem Winkel 3d der Schwenkung des schwenkbaren Handgriffes 3a eine isolierende Abdeckung auch im Bereich des Gelenkes zwischen den beiden Griffhebeln 3, 3a zu sichern, ist die am Handgriff 3a angebrachte nicht leitende Hülse 18a mit kreisbogenförmigen parallelen Rillen 18c versehen innerhalb welcher seitlich ein gewölbtes Element 17a verschiebbar eingesetzt ist welches geeignet ist die metallischen Elemente im Innern des kugelkappenförmigen Ansatzes 14c, 14d der beiden seitlichen Schalen 14, 14a, bei jeder beliebigen Position des schwenkbaren Handgriffes 3a, immer die Abdeckung gemäß den Sicherheitsvorschriften, zu garantieren.

Es ist klar, dass sämtliche nicht leitende Schalen, zwecks Austausch oder zwecks Wartung und/oder Reparatur an den mechanischen und öldynamischen Teilen des Werkzeuges, einfach und leicht montierbar und demontierbar sind.

## Patentansprüche

1. Öldynamisches Druck und Schneidwerkzeug, mit einem unbeweglich am Körper (2) des Gehäuses (11) einer Hydraulikpumpe, samt den entsprechenden Ventilen und Durchlässen für das Öl, verbundenem Handgriff (3), mit einem stirnseitigen, mit Ablassventil (10) versehenem, Ansatz (11b) für den Einsatz austauschbarer öldynamischer Druck- oder Schneidwerkzeugköpfe (1) und mit einem am genannten Gehäuse (11) schwenkbar gelagerten Handgriff (3a) an welchem ein innerer Griff schwenkbar gelagert ist, **dadurch gekennzeichnet, dass** der innere Griff (3b) welcher am schwenkbaren Handgriff (3a) im Bereich nahe dem Körper (2) des Werkzeuges vorgesehen ist, mit dem Handgriff (3a) oder mit einer daran befestigten nicht leitenden Hülse (18a) einstückig ist und dass dieser innere Griff (3b) die Form eines Bügels oder eines Ringes mit zwei oder nur einem Verbindungsschenkel(n) zum Handgriff (3a) hat.

2. Öldynamisches Werkzeug gemäß Schutzanspruch 1, **dadurch gekennzeichnet, dass** der innere Griff (3b) mit seinen beiden Verbindungsschenkeln oder mit nur einem Verbindungsschenkel direkt am Handgriff (3a) oder an einer daran angebrachten Hülse (18a) befestigt ist.

3. Öldynamisches Werkzeug gemäß Schutzanspruch 1, **dadurch gekennzeichnet dass** der innere Griff (3b) die Form eines offenen Bügels oder Ringes hat wobei er über nur einen Verbindungsschenkel mit dem Handgriff (3a) oder mit der daran angebrachten Hülse (18a) verbunden ist.

4. Öldynamisches Werkzeug gemäß Schutzanspruch 1, **dadurch gekennzeichnet, dass** der innere Griff (3b) aus einem flexiblen Werkstoff besteht, ein Riemenstück oder ein Schnurstück ist.

5. Öldynamisches Werkzeug gemäß Schutzanspruch 1, **dadurch gekennzeichnet, dass** der innere Griff (3b) sich über einen Teil oder über die gesamte Länge des Handgriffes (3a) erstreckt.

## Claims

1. Oil-hydraulic pressing and cutting tool, comprising a handle (3) fixedly connected on the body (2) of the housing (11) of a hydraulic pump, together with the corresponding valves and passages for the oil, comprising a front-end extension (11b), provided with a discharge valve (10), for the insertion of interchangeable oil-hydraulic pressing or cutting tool heads (1), and comprising a handle (3a) which is pivotably mounted on said housing (11) and on which an inner grip is pivotably mounted, **characterized in that** the inner grip (3b), which is provided on the pivotable handle (3a) in the region close to the body (2) of the tool, is in one piece with the handle (3a) or with a non-conductive sleeve (18a) fastened thereto, and **in that** this inner grip (3b) has the shape of a stirrup or a ring having two connecting legs or only one connecting leg to Lhe handle (3a).

2. Oil-hydraulic tool according to Claim 1, **characterized in that** the inner grip (3b) is fastened with its two connecting legs or with only one connecting leg directly to the handle (3a) or to a sleeve (18a) attached thereto.

3. Oil-hydraulic tool according to Claim 1, **characterized in that** the inner grip (3b) has the shape of an open stirrup or ring, wherein it is connected via only one connecting leg to the handle (3a) or to the sleeve (18a) attached thereto.

4. Oil-hydraulic tool according to Claim 1, **characterized in that** the inner grip (3b) is made of a flexible material, a belt piece or a cord piece.

5. oil-hydraulic tool according to Claim 1, **characterized in that** the inner grip (3b) extends over part or over the entire length of the handle (3a).

## Revendications

1. Outil poussant et coupant oléodynamique, avec une poignée (3) reliée de manière indéplaçable au corps (2) du carter (11) d'une pompe hydraulique, avec les soupapes et passages correspondants pour l'huile, avec un appendice (11b) situé côte frontal, muni d'une soupape d'échappement (10), pour l'insertion de têtes d'outil poussant ou coupant (1) oléodynamiques interchangeables, et avec une poignée (3a), montée à pivotement sur le carter (11) cité, sur laquelle une poignée intérieure est montée à pivotement, **caractérisé en ce que** la poignée intérieure (3b), prévue sur la poignée (3a) pivotante, dans la zone proche du corps (2) de l'outil, est réalisée d'une seule pièce avec la poignée (3a) ou avec une douille (18a) non conductrice, lui étant fixée, et **en ce que** cette poignée intérieure (3b) présente la forme d'un étrier ou d'un anneau, avec deux ou une seule branche(s) de liaison à la poignée (3a).

2. Outil oléodynamique selon la revendication 1, **caractérisé en ce que** la poignée intérieure (3b) est fixée, par ses deux branches de liaison ou par une seule branche de liaison, directement sur la poignée (3a) ou sur une douille (18a) montée sur elle.

3. Outil oléodynainique selon la revendication 1, **caractérisé en ce que** la poignée intérieure (3b) présente la forme du étriper ou anneau ouvert, étant directement reliée, par une seule branche de liaison, à la poignée (3a) ou à la douille (18a) montée sur elle.

4. Outil oléodynamique selon la revendication 1, **caractérisé en ce que** la poignée intérieur (3b) est composée d'un matériau flexible, étant un morceau de courroie ou un morceau de cordon.

5. Outil oléodynamique selon la revendication 1, **caractérisé en ce que** la poignée intérieure (3b) s'étend sur une partie ou sur la totalité de la longueur de la poignée (3a).
